# FASCICULE DE BREVET EUROPEEN

(11) **EP 4 326 972 B1**
(45) Date de publication et mention de la délivrance du brevet: **01.01.2025**
(21) Numéro de dépôt: 22722300.5
(22) Date de dépôt: 12.04.2022
(51) Int. Cl.: F01D 9/04, F01D 11/08, F01D 11/12

(54) **ENSEMBLE D'ANNEAU DE TURBINE MONTÉ SUR ENTRETOISE**
AUF TRÄGER MONTIERTE TURBINENRINGBAUGRUPPE
TURBINE RING ASSEMBLY MOUNTED ON CARRIER

(30) Priorité: 21.04.2021 FR 2104149
(43) Date de publication de la demande: 28.02.2024
(73) Titulaire: SAFRAN AIRCRAFT ENGINES, 75015 Paris (FR)
(72) Inventeur: LEMONNIER, Jérôme, Claude, George, 77550 MOISSY-CRAMAYEL (FR); BOISNAULT, Franck, Davy, 77550 MOISSY-CRAMAYEL (FR); GAUDRY, Florian, Armand, Gabriel, 77550 MOISSY-CRAMAYEL (FR); BAUDY, Kévin, Claude, Luc, 77550 MOISSY-CRAMAYEL (FR); CHAMBRE, Marion, France, 77550 MOISSY-CRAMAYEL (FR)
(74) Mandataire: Cabinet Beau de Loménie
(86) Numéro de dépôt international: PCT/FR2022/050688
(87) Numéro de publication internationale: WO 2022/223905

(56) Documents cités:
- EP-A1- 3 045 783
- EP-A1- 3 118 417
- EP-A1- 3 680 455
- WO-A1-2015/191174
- WO-A1-2015/191186
- US-A1- 2006 292 001

## Description

### Domaine Technique

L'invention concerne un ensemble d'anneau de turbine pour une turbomachine dans lequel l'ensemble comprend une pluralité de secteurs angulaires d'anneau en matériau composite à matrice céramique mis bout à bout pour former un anneau de turbine.

Le domaine d'application de l'invention est notamment celui des moteurs aéronautiques à turbine à gaz. L'invention est toutefois applicable à d'autres turbomachines, par exemple des turbines industrielles.

### Technique antérieure

Dans le cas d'ensembles d'anneau de turbine entièrement métalliques, il est nécessaire de refroidir tous les éléments de l'ensemble et en particulier l'anneau de turbine qui est soumis aux flux les plus chauds. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre ces problèmes, il a été envisagé de réaliser des secteurs d'anneau de turbine en matériau composite à matrice céramique (CMC) afin de s'affranchir de la mise en oeuvre d'un matériau métallique.

Les matériaux CMC présentent de bonnes propriétés mécaniques les rendant aptes à constituer des éléments de structures et conservent avantageusement ces propriétés à températures élevées. La mise en oeuvre de matériaux CMC a avantageusement permis de réduire le flux de refroidissement à imposer lors du fonctionnement et donc à augmenter la performance des turbomachines. En outre, la mise en oeuvre de matériaux CMC permet avantageusement de diminuer la masse des turbomachines et de réduire l'effet de dilatation à chaud rencontré avec les pièces métalliques.

On connaît par ailleurs les documents WO 2015/191186, EP 3 118 417, WO 2015/191174, US 2006/292001, FR 2 540 939, GB 2 480 766, EP 1 350 927,

US 2014/0271145, US 2012/082540 et FR 2 955 898 qui divulguent des ensembles d'anneau de turbine.

Les secteurs d'anneau comportent une base annulaire dont la face interne définit la face interne de l'anneau de turbine et une face externe à partir de laquelle s'étendent radialement deux pattes dont les extrémités sont maintenues entre les deux brides d'une structure métallique de support d'anneau.

L'utilisation de secteurs d'anneau en CMC permet ainsi de réduire significativement la ventilation nécessaire au refroidissement de l'anneau de turbine. Toutefois, le CMC ayant un comportement mécanique différent d'un matériau métallique, son intégration ainsi que la manière de le positionner au sein de la turbine ont dû être repensés. En effet, le CMC ne supporte pas les montages frettés (usuellement employés pour les anneaux métalliques) et sa dilation thermique est plus faible qu'un matériau métallique.

De plus, l'utilisation de secteurs d'anneau en CMC accroît le nombre de pièces nécessaires pour son intégration sur le carter de turbine, ce qui augmente le coût et le poids de l'ensemble et nécessite des opérations de montage complexes (frettage de douilles, montage de goupilles, etc.).

### Exposé de l'invention

La présente invention a donc pour but principal de proposer un ensemble d'anneau de turbine qui ne présente pas les inconvénients précités tout en possédant une masse réduite et en réduisant d'autant plus l'intensité des contraintes mécaniques auxquelles les secteurs d'anneau en CMC sont soumis lors du fonctionnement de la turbine.

Ce but est atteint grâce à un ensemble d'anneau de turbine s'étendant autour d'un axe, l'ensemble comprenant une pluralité de secteurs d'anneau en matériau composite à matrice céramique formant un anneau de turbine et une structure de support d'anneau maintenue par un carter de turbine. Chaque secteur d'anneau comprend une base à partir de laquelle s'étendent radialement vers l'extérieur une patte d'accrochage amont et une patte d'accrochage aval espacées axialement l'une de l'autre.

L'ensemble d'anneau de turbine selon l'invention est remarquable notamment en ce qu'il comprend en outre une entretoise mécaniquement raccordée au support d'anneau et comportant une première bride radiale en appui contre les pattes d'accrochage amont des secteurs d'anneau, et, pour chaque secteur d'anneau, au moins deux pions transversaux et un ressort radial, chaque pion transversal traversant la patte d'accrochage amont et la patte d'accrochage aval du secteur d'anneau et le support d'anneau pour maintenir le secteur d'anneau et le support d'anneau solidaires l'un de l'autre, et le ressort radial étant maintenu en appui contre le secteur d'anneau d'une part et contre le support d'anneau d'autre part, le support d'anneau comprenant en outre une deuxième bride radiale en appui contre les pattes d'accrochage aval des secteurs d'anneau, la patte d'accrochage amont et la patte d'accrochage aval de chaque secteur d'anneau étant disposées axialement entre la première bride radiale et la deuxième bride radiale.

L'architecture de l'ensemble d'anneau de turbine selon l'invention permet ainsi d'offrir un maintien radial et axial de chaque secteur d'anneau en matériau CMC n'utilisant pas les techniques de maintien pour anneaux métalliques et fait de manière à maîtriser sa position et éviter qu'il se mette à vibrer, d'une part, tout en permettant au secteur d'anneau, et par extension à l'anneau, de se déformer librement sous les effets des montées en température et des variations de pression, et ce notamment grâce à un nombre réduit de pièces métalliques en interface.

Dans cette architecture, le maintien radial d'un anneau en matériau CMC est assurée, d'une part, par lesdits au moins deux pions traversant chaque secteur d'anneau et le support d'anneau par l'intermédiaire de trous axiaux prévus à cet effet, et, d'autre part, par l'intermédiaire du ressort métallique placé entre deux pions et étant en appui radial entre le secteur d'anneau et le support d'anneau.

Le ressort permet notamment de maintenir les secteurs d'anneaux disposés à une même position radiale.

Le maintien axial d'un anneau en matériau CMC est assuré, d'une part, par la solidarisation du support d'anneau à l'entretoise par exemple via au moins un ensemble formé d'une vis et d'un écrou, fixant le support d'anneau et l'entretoise ensemble à l'extérieur du carter, et, d'autre part, par le contact plan entre la patte d'accrochage amont de l'anneau et l'entretoise et par le contact plan entre le support d'anneau et la patte d'accrochage aval de l'anneau.

En outre, cette configuration architecturale de l'ensemble d'anneau de turbine offre une solution dépourvue de liaison boulonnée entre l'anneau de turbine et la structure de support d'anneau et le carter, la liaison étant effectuée grâce aux pions transversaux ce qui permet de réduire la masse totale de l'ensemble de manière importante. En outre, la suppression des liaisons boulonnées permet également d'agencer différemment les pièces de l'ensemble d'anneau ce qui permet également un gain de masse par une réduction du nombre d'éléments constituants l'ensemble d'anneau de turbine.

En outre, la suppression de pions radiaux diminue les opérations d'usinage des pièces de la structure de support d'anneau. Il en résulte un gain de pièces, et donc une diminution du poids et du coût de l'ensemble.

Ladite première bride radiale comprend une première portion et une seconde portion radialement à l'intérieure de la première portion, la seconde portion comportant une première patte et une seconde patte axialement distantes l'une de l'autre et toutes deux solidaires de la première portion, la première patte étant axialement en amont de la seconde patte, et la seconde patte étant en appui contre la patte d'accrochage amont.

La première bride radiale de l'entretoise permet ainsi de minimiser la contrainte tangentielle dans les pièces métalliques assurant le maintien de l'anneau, d'une part, et de compenser la forte dispersion de fabrication des secteurs d'anneau CMC, notamment la longueur axiale des anneaux.

En outre, la réalisation de l'entretoise en une seule pièce permet de réduire significativement le nombre de pièce nécessaire au maintien de l'anneau.

Par ailleurs, les tolérances de fabrication sont moins sévères, l'entretoise permettant de rattraper les écarts entre les secteurs d'anneau, ce qu'un flasque à 360° ne peut pas faire.

Selon un deuxième aspect de l'ensemble d'anneau de turbine, la patte aval de ladite première bride radiale peut comprendre une première extrémité qui est solidaire de la première portion de la première bride radiale et une seconde extrémité qui est libre et opposée à la première extrémité, la patte aval comprenant en outre des fentes radiales régulièrement espacées angulairement et s'étendant chacune depuis la seconde extrémité jusqu'à un orifice circulaire, le nombre de fentes radiales étant égal au plus au nombre de secteurs d'anneau.

Les orifices circulaires dans lesquelles débouches les fentes permettent de réduire la concentration de contrainte dans la zone. Dans un mode de réalisation le nombre de fentes peut être égale au nombre de secteurs d'anneau. De cette manière, le contact entre l'entretoise et chaque secteur d'anneau de l'ensemble est assuré quelle que soit la dispersion de fabrication des secteurs d'anneau en CMC. Dans un autre mode de réalisation, les secteurs d'anneau peuvent être appairés deux à deux ou trois à trois afin de créer des couples de deux ou trois anneaux ayant des longueurs axiales sensiblement identiques. Les couples de secteurs d'anneau sont ensuite montés côté à côté sur le moteur pour former l'anneau.

De cette manière le nombre de fentes nécessaires sur la patte aval de la première bride radiale de l'entretoise peut être divisé par deux ou trois. Cette réduction du nombre de fentes permet d'augmenter d'autant plus la robustesse de la ventilation du dispositif en améliorant l'étanchéité entre le secteur hors veine et le secteur veine, notamment l'étanchéité de la cavité située au niveau de la partie radialement supérieure de l'anneau.

Selon un troisième aspect de l'ensemble d'anneau de turbine, l'entretoise peut comprendre une couronne disposée autour de l'anneau de turbine, et le support d'anneau peut comprendre une virole disposée radialement entre l'anneau de turbine et la couronne de l'entretoise.

Selon un quatrième aspect de l'ensemble d'anneau de turbine, la couronne de l'entretoise peut comprendre des orifices d'injection et la virole du support d'anneau comprend des orifices d'injection complémentaires radialement décalés par rapport aux orifices d'injection. Autrement dit, aucun orifice d'injection complémentaire du support d'anneau n'est radialement aligné avec un orifice d'injection de l'entretoise.

Les orifices d'injection et les orifices d'injection complémentaire fournissent de l'air froid à une pression élevée, généralement de l'air prélevé en sortie du compresseur haute pression, permettant de pressuriser les cavités situées entre l'anneau et l'entretoise ou en l'anneau et le support d'anneau. Autrement dit, cette injection d'air permet de pressuriser le secteur hors veine et ainsi d'améliorer l'étanchéité entre le secteur hors veine et le secteur veine.

Selon un cinquième aspect de l'ensemble d'anneau de turbine, l'ensemble peut comprendre en outre un joint annulaire en C s'étendant entre la couronne de l'entretoise et la virole du support d'anneau, le joint annulaire en C étant coaxial avec la couronne de l'entretoise et la virole du support d'anneau.

Le joint en C placé entre l'entretoise et le support d'anneau permet de minimiser toute fuite entre ces deux pièces et d'améliorer la robustesse du dispositif de refroidissement des anneaux.

Selon un sixième aspect de l'ensemble d'anneau de turbine, la structure de support d'anneau peut comprendre en outre une première bride radiale de support et une seconde bride radiale de support axialement distante de la première bride radiale de support, chaque pion transversal traversant la première bride radiale de support et la seconde bride radiale de support.

Le couplage radial des secteurs d'anneau de turbine au support d'anneau via des pions transversaux permet d'éviter d'utiliser des liaisons boulonnées plus encombrantes et plus lourdes, et de simplifier la configuration mécanique de l'ensemble d'anneau.

Selon un septième aspect de l'ensemble d'anneau de turbine, le ressort radial peut comprendre une plaque métallique présentant au moins un bombage dans une première direction parallèle à la direction axiale.

La plaque métallique formant le ressort radial peut être ondulée ou bien bombée, la bosse s'étendant radialement pour exercer une force selon la direction radiale de l'anneau de turbine.

Selon un huitième aspect de l'ensemble d'anneau de turbine, le ressort radial comprend en outre une languette s'étendant en saillie depuis le sommet du bombage dans une deuxième direction orthogonale à la première direction et s'étendant le long du bombage dans une troisième direction orthogonale aux première et deuxième directions sur une longueur inférieure à la longueur de la plaque métallique dans la troisième direction, la languette étant disposée entre les première et seconde brides radiales de support pour former une butée axiale au ressort.

La languette du ressort empêche ainsi le ressort de se déplacer axialement.

Selon un neuvième aspect de l'ensemble d'anneau de turbine, l'ensemble peut comprendre en outre une languette d'étanchéité en L disposée à chaque jonction entre deux secteurs d'anneau adjacent, chaque languette d'étanchéité comprenant une grande portion s'étendant axialement et une petite portion s'étendant radialement, la petite portion étant solidaire de la grande portion à une extrémité amont de la grande portion.

La languette s'étendant selon la direction circonférentielle entre deux secteurs d'anneau adjacents sur toute la longueur axiale des secteurs d'anneau, celle-ci forme un joint assurant l'étanchéité entre le secteur de veine et le secteur hors veine. En outre, la forme en L de la languette permet d'éviter tout choc entre la languette et la deuxième bride radiale.

Selon un dixième aspect de l'ensemble d'anneau de turbine, l'ensemble peut comprendre en outre un anneau de protection thermique monté radialement à l'intérieur de la deuxième bride radiale, la deuxième bride radiale du support d'anneau comprenant en outre des trous de décharges traversant axialement ladite deuxième bride radiale du support d'anneau.

Les trous de décharge et l'anneau de protection thermique permet d'assurer l'étanchéité entre le secteur hors veine et le secteur veine, notamment dans les cavités situées en aval des secteurs d'anneau. L'anneau de protection thermique peut être une tôle métallique annulaire segmentée en un seul endroit de sa circonférence pour mieux s'adapter aux dimensions radiales.

L'invention a également pour objet une turbomachine comprenant un ensemble tel que défini précédemment.

### Brève description des dessins

[Fig. 1] La figure 1 est une vue schématique en coupe selon un plan comprenant la direction axiale et la direction radiale d'un ensemble d'anneau de turbine selon l'invention.
[Fig. 2] La figure 2 représente une vue schématique en coupe et en perspective de l'entretoise de l'ensemble de turbine de la figure 1.
[Fig. 3] La figure 3 représente une vue schématique en perspective du ressort radial de l'ensemble de turbine de la figure 1.
[Fig. 4] La figure 4 représente une vue en coupe de l'ensemble d'anneau au niveau d'un ressort radial selon un plan de coupe comprenant la direction axiale et la direction radiale.
[Fig. 5] La figure 5 représente une vue en coupe de l'ensemble d'anneau au niveau d'un secteur d'anneau selon un plan de coupe comprenant la direction radiale et orthogonal à la direction axiale.

### Description des modes de réalisation

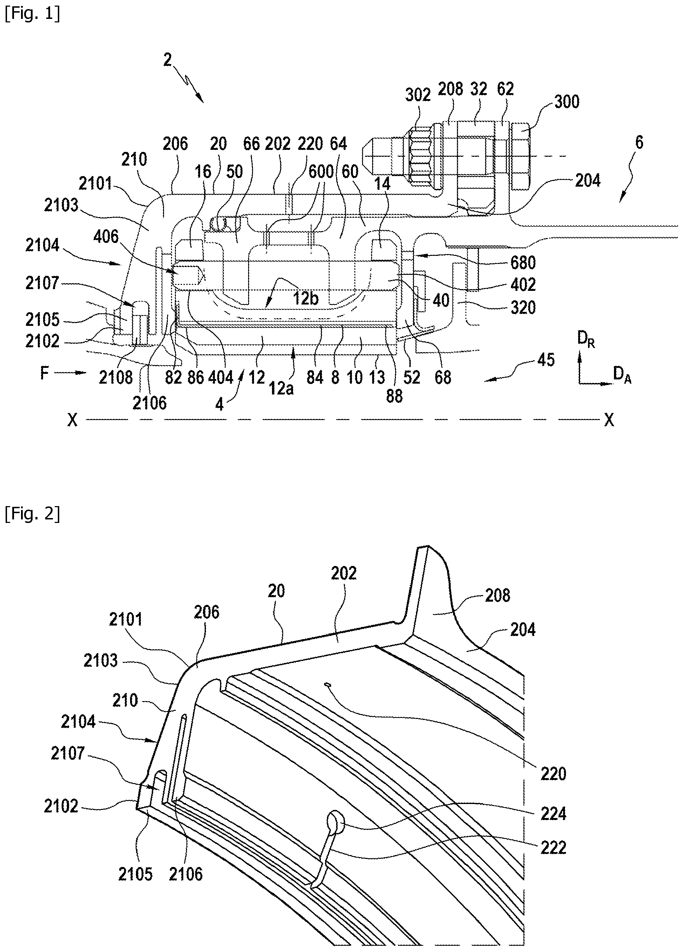

La figure 1 représente schématiquement un ensemble 2 d'anneau de turbine selon l'invention. La figure 1 est une vue en coupe selon un plan comprenant la direction radiale et la direction axiale.

Cet ensemble 2 comprend notamment un anneau de turbine 4 en matériau composite à matrice céramique (CMC) centré sur un axe longitudinal X-X, une structure métallique de support d'anneau 6 fixé à un carter de turbine dont seulement une portion d'attache 32 est représentée sur la figure 1 pour plus de lisibilité. L'anneau de turbine 4 entoure un ensemble d'aubes de turbine non représentée.

Par la suite, dans tout le texte, les termes « amont » et « aval » sont utilisés en référence au sens d'écoulement du flux gazeux F au travers des aubes indiqué par une flèche.

Par ailleurs, l'anneau de turbine 4 est formé d'une pluralité de secteurs angulaires d'anneau 10 qui sont mis bout à bout selon la direction circonférentielle pour former un anneau. Sur la figure 1, la flèche D_{A} indique la direction axiale de l'anneau de turbine tandis que la flèche D_{R} indique la direction radiale de l'anneau de turbine.

Chaque secteur angulaire d'anneau 10 présente une section sensiblement en forme de Pi (ou π) inversé avec une base 12 munie d'une face interne 12a qui définit une portion angulaire de la face interne de l'anneau de turbine 4 et qui est typiquement munie d'une couche de revêtement abradable 13 faisant également office de barrière thermique et environnementale.

Deux pattes d'accrochage, une patte d'accrochage aval 14 et une patte d'accrochage amont 16, s'étendent radialement à partir de la face externe 12b de la base 12 opposée à la face interne 12a. Ces pattes d'accrochage 14 et 16 s'étendent sur toute la largeur de chaque secteur d'anneau 10 (dans le sens circonférentiel).

En plus de l'anneau de turbine 4 et de la structure de support d'anneau 6 disposée radialement à l'extérieur de l'anneau de turbine 4, l'ensemble d'anneau 2 comprend en outre une entretoise 20 fixée à la structure de support d'anneau 6 à l'aide d'un boulon 300 et d'un écrou 302.

L'entretoise 20 comprend une couronne 202 s'étendant autour de l'axe X-X et présentant une extrémité aval 204 et une extrémité amont 206. L'entretoise 20 comprend en outre une première bride radiale d'attache 208 s'étendant radialement vers l'extérieur depuis l'extrémité aval 204 de l'entretoise 20

La structure de support d'anneau 6 comprend une virole 60 s'étendant autour de l'axe X-X et comprend une seconde bride d'attache 62 s'étendant radialement vers l'extérieur depuis la virole 60.

La seconde bride radiale d'attache 62 de la virole 60 de la structure de support d'anneau 6, la portion d'attache 32 du carter de turbine et la première bride radiale d'attache 208 de l'entretoise 20 sont fixées ensemble à l'aide du boulon 300 qui traverse axialement les trois éléments et de l'écrou 302.

La structure de support d'anneau 6 comprend en outre une première bride radiale d'accroche 64 pour l'anneau 4 et une seconde bride radiale d'accroche 66 pour l'anneau 4 s'étendant chacune vers l'intérieur selon la direction radiale D_{R}, c'est-à-dire vers l'anneau de turbine 4.

La première bride radiale d'accroche 64 est placée en aval de la seconde bride radiale d'accroche 66. La première bride radiale d'accroche 64 et la seconde bride radiale d'accroche 66 sont disposées axialement entre la patte d'accrochage aval 14 et la patte d'accrochage amont 16 des secteurs d'anneau 10.

L'ensemble 2 d'anneau de turbine comprend en outre des pions transversaux 40, chaque pion transversal 40 étant formé en une seule pièce et traversant axialement, dans le sens de l'écoulement de gaz F, la patte amont 16 d'un secteur d'anneau 10, la deuxième bride radiale d'accroche 66 de la structure de support d'anneau 6, la première bride radiale d'accroche 64 de la structure de support d'anneau 6, et la patte aval d'accrochage 14.

Chaque pion transversal 40 comprend une extrémité aval 402, une extrémité amont 404, l'extrémité amont comprenant un orifice axial 406 pour faciliter le retrait du pion 40.

L'entretoise 20 comprend en outre une bride radiale amont 210 s'étendant radialement vers l'intérieure depuis l'extrémité amont 206 de l'entretoise 20. La bride radiale amont 210 comprend, selon la direction radiale D_{R}, une première extrémité 2101 solidaire de l'extrémité amont 206 de l'entretoise 20, une seconde extrémité 2102 libre et opposée à la première extrémité 2101, une première portion 2103 et une seconde portion 2104, la première portion 2103 s'étendant radialement entre la première extrémité 2101 et la seconde portion 2104, et la seconde portion 2104 s'étendant radialement entre la première portion 2103 et la seconde extrémité 2102.

La seconde portion 2104 de la bride radiale amont 210 de l'entretoise 20 comprend une patte amont 2105 et une patte aval 2106. La patte amont 2105 et la patte aval 2106 de la seconde portion 2104 de la bride radiale amont 210 forment deux anneaux distants l'un de l'autre selon la direction axiale D_{A}. En outre, la patte aval 2106 de la bride radiale amont 210 est en appui contre la patte d'accrochage amont 16 des secteurs d'anneau 10.

La patte d'accrochage amont 16 des secteurs d'anneau 10 est ainsi axialement disposée, selon la direction de l'écoulement F, entre la patte aval 2106 de la bride radiale amont 210 de l'entretoise 20 et la seconde bride radiale d'accroche 66 de la structure de support d'anneau 6.

En outre, la patte amont 2105 de la seconde portion 2104 de la bride radiale amont 210 comprend une rainure radiale 2107 sur son extrémité radialement intérieure à l'intérieur de laquelle est inséré un joint d'étanchéité 2108.

L'entretoise 20 peut être une pièce de révolution (c'est-à-dire de 360°) ou bien être réalisée par un assemblage d'une pluralité de secteurs d'entretoise mis bout à bout. Il en de même de la structure de support d'anneau qui peut être faite en une pièce de révolution ou par un assemblage de secteurs de flasque.

La structure de support d'anneau 6 comprend en outre une bride radiale aval 68 disposée axialement en aval de première bride d'accroche 64 et en aval de la patte aval d'accrochage 14 des secteurs d'anneau 10. La patte aval d'accrochage 14 des secteurs d'anneau 10 est ainsi disposée axialement, selon le sens d'écoulement F, entre la première bride radiale d'accroche 64 et la bride radiale aval 68 de la structure de support d'anneau 6. La bride radiale aval 68 est en appui contre la patte d'accrochage aval 16 des secteurs d'anneau 10.

Les secteurs d'anneau 10 sont ainsi maintenus axialement en appui entre la patte aval 2106 de la bride radiale amont 210 de l'entretoise 20 et la brode radiale aval 68 de la structure de support d'anneau 6.

La couronne 202 de l'entretoise 20 comprend en outre des orifices d'injection 220 traversant radialement la couronne 202 et la virole 60 de la structure de support d'anneau 6 comprend en outre des orifices d'injection complémentaires 600 traversant radialement la virole 60. Les orifices d'injection 200 et les orifices d'injection complémentaires 600 ne sont pas alignés radialement. Ils peuvent être arrangés en quinconce les uns par rapport aux autres. Les orifices d'injection 200 et les orifices d'injection complémentaires 600 permettent d'acheminer de l'air de refroidissement prélevé depuis le compresseur haute pression dans les cavités situées entre la structure de support d'anneau 6 et l'anneau de turbine 4 notamment.

La bride radiale aval 68 de la structure de support d'anneau 6 comprend en outre des trous de décharge 680 permettant d'acheminer de l'air de refroidissement jusque dans la cavité située en aval de la bride radiale aval 68.

L'ensemble d'anneau 2 comprend en outre un joint annulaire 50 métallique en forme de C disposé radialement entre l'entretoise 20 et la structure de support d'anneau 6 pour améliorer l'étanchéité.

L'ensemble d'anneau 2 comprend également un anneau de protection thermique 52 en métal disposé radialement entre la bride radiale aval 68 de la structure de support d'anneau 6 et la veine 45 à l'intérieur de laquelle s'écoule le flux gazeux F.

En outre, comme cela est illustré sur la figure 2 qui présente une vue en coupe schématique en perspective de l'entretoise 20, la patte aval 2106 de la bride radiale amont 210 de l'entretoise 20 comprend en outre une pluralité de fentes radiales 222 régulièrement espacées angulairement selon la direction circonférentielle. Les fentes radiales 222 sont ouvertes et s'étendent radialement depuis la seconde extrémité 2102 de la bride radiale amont 210 jusqu'à un orifice circulaire 224 permettant de réduire l'accumulation des contraintes. Selon le mode de réalisation, le nombre de fentes radiales 222 est égal au nombre de secteurs d'anneau 10 formant l'anneau de turbine 4, ou bien est égal au nombre de secteurs d'anneau 10 divisé par deux ou trois.

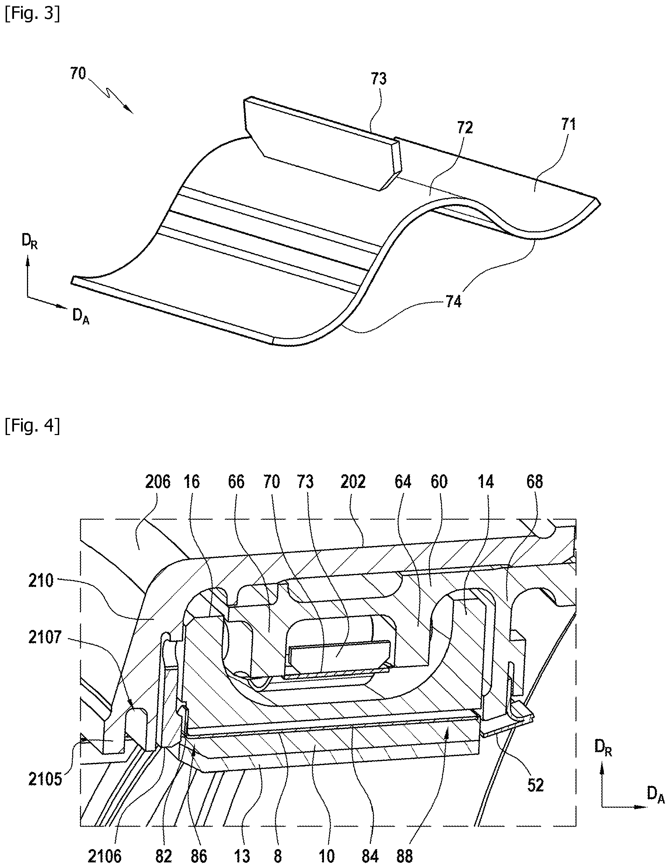

Sur la figure 3 est représenté schématiquement en perspective un ressort radial 70. Le ressort radial 70 comprend une plaque métallique 71 ondulée, l'ondulation étant disposée selon une première direction tangente à la direction circonférentielle de l'anneau de turbine 4 lorsque le ressort radial 70 est monté sur l'ensemble d'anneau de turbine 2. La plaque métallique 71 comprend ainsi un bossage central 72 depuis lequel s'étend radialement en saillie une languette 73 qui s'étend également selon une seconde direction orthogonale à la première direction et parallèle à la direction axiale D_{A} lorsque le ressort radial 70 est monté sur l'ensemble d'anneau de turbine 2. La longueur de la languette dans la direction axiale D_{A} est inférieure à la longueur de la plaque métallique 71.

Le bossage central 72 est entouré de deux pattes 74 présentant un bossage opposé au bossage central 72.

Comme cela est illustré sur la figure 4 qui représente une vue en coupe selon un plan comprenant la direction axiale D_{A} et la direction radiale D_{R} au niveau d'un ressort radial 70, la languette 73 est axialement disposée et maintenue entre la première bride radiale d'accroche 64 et la seconde bride radiale d'accroche 66. Radialement, le ressort radial 70 est en appui, via ses pattes 74, contre la base 12 du secteur d'anneau 10 dans lequel il est monté et contre la virole 60 de la structure de support d'anneau 6 via sa languette 73.

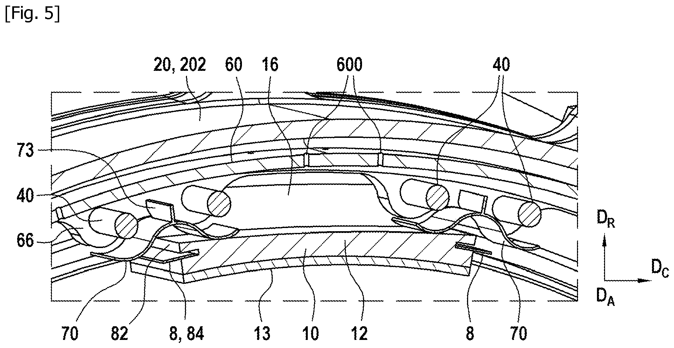

Comme cela est illustré sur les figure 1 et 4, et sur la figure 5 qui présente une vue en coupe de l'ensemble d'anneau de turbine 2 au niveau d'un secteur d'anneau 10 selon un plan de coupe comprenant la direction radiale D_{R} et la direction circonférentielle D_{C} qui est orthogonale à la direction radiale D_{R} et à la direction axiale D_{A}, l'ensemble d'anneau comprend en outre une languette d'étanchéité 8 présentant une forme de L avec une petite portion 82 et une grande portion 84.

La grande portion s'étend selon la direction axiale D_{A} entre une extrémité amont 86 et une extrémité aval 88. La petite portion 82 s'étend radialement vers l'extérieur depuis l'extrémité amont 86 de la grande portion 84.

La languette d'étanchéité 8 est disposée à chaque jonction entre deux secteurs d'anneaux 10. La petite portion 82 permet de maintenir axialement en position la languette d'étanchéité 8 et d'éviter qu'elle ne se déplace vers l'aval et qu'elle n'abime la bride radiale aval 68 de la structure de support d'anneau 6.

La présente invention propose ainsi un ensemble d'anneau de turbine ayant un nombre réduit de pièces diminuant ainsi le risque de fuite et améliorant la robustesse de la ventilation et de l'étanchéité de l'ensemble tout en assurant le maintien des secteurs d'anneau en matériau CMC. De plus, l'ensemble d'anneau de turbine selon l'invention fait abstraction de la dispersion de fabrication des secteurs d'anneaux en CMC et permet de diminuer les contraintes tangentielles au niveau des dispositifs de maintien des anneaux. En outre, l'ensemble d'anneau de turbine est intégrable sur une plus grande gamme de turbine

## Revendications

1. Ensemble (2) d'anneau de turbine s'étendant autour d'un axe (X-X), comprenant une pluralité de secteurs d'anneau (10) en matériau composite à matrice céramique formant un anneau de turbine (4) et une structure de support d'anneau (6) maintenue par un carter de turbine, chaque secteur d'anneau (10) comprenant une base (12) à partir de laquelle s'étendent radialement vers l'extérieur une patte d'accrochage amont (16) et une patte d'accrochage aval (14) espacées axialement l'une de l'autre, l'ensemble (2) comprenant en outre :
- une entretoise (20) mécaniquement raccordée à la structure de support d'anneau (6) et comprenant une première bride radiale (210) en appui contre les pattes d'accrochage amont (16) des secteurs d'anneau (10), et
- pour chaque secteur d'anneau (10), au moins deux pions transversaux (40), chaque pion transversal (40) traversant la patte d'accrochage amont (16) et la patte d'accrochage aval (14) du secteur d'anneau (10) et la structure de support d'anneau (6) pour maintenir le secteur d'anneau (10) et la structure de support d'anneau (6) solidaires l'un de l'autre, la structure de support d'anneau (6) comprenant en outre une deuxième bride radiale (68) en appui contre les pattes d'accrochage aval (14) des secteurs d'anneau (10), la patte d'accrochage amont (16) et la patte d'accrochage aval (14) de chaque secteur d'anneau (10) étant disposées axialement entre la première bride radiale (210) et la deuxième bride radiale (68), **caractérisé en ce que** l'ensemble (2) comprend en outre un ressort radial (70) maintenu en appui, dans une direction radiale (D_{R}) orthogonale à la direction axiale (X-X), contre le secteur d'anneau (10) d'une part et contre la structure de support d'anneau (6) d'autre part pour maintenir les secteurs d'anneaux disposés à une même position radiale, et **en ce que** ladite première bride radiale (210) comprend une première portion (2103) et une seconde portion (2104) radialement à l'intérieure de la première portion (2103), la seconde portion (2104) comportant une première patte (2105) et une seconde patte (2106) axialement distantes l'une de l'autre et toutes deux solidaires de la première portion (2103), la première patte (2105) étant axialement en amont de la seconde patte (2106), et la seconde patte (2106) étant en appui contre la patte d'accrochage amont (16).

2. Ensemble (2) selon la revendication 1, dans lequel la patte aval (2106) de ladite première bride radiale (210) comprend une première extrémité qui est solidaire de la première portion (2103) de la première bride radiale (210) et une seconde extrémité qui est libre et opposée à la première extrémité, la patte aval (2106) comprenant en outre des fentes radiales (222) régulièrement espacées angulairement et s'étendant chacune depuis la seconde extrémité jusqu'à un orifice (224), le nombre de fentes radiales (222) étant égal au plus au nombre de secteurs d'anneau (10).

3. Ensemble (2) selon l'une des revendications 1 ou 2, dans lequel l'entretoise (20) comprend une couronne (202) disposée autour de l'anneau de turbine (4), et la structure de support d'anneau (6) comprend une virole (60) disposée radialement entre l'anneau de turbine (4) et la couronne (202) de l'entretoise (20).

4. Ensemble (2) selon la revendication 3, dans lequel la couronne (202) de l'entretoise (20) comprend des orifices d'injection (220) et la virole (60) de la structure de support d'anneau (6) comprend des orifices d'injection complémentaires (600) axialement décalés par rapport aux orifices d'injection (220).

5. Ensemble (2) selon l'une des revendications 3 ou 4, comprenant en outre un joint annulaire en C (50) s'étendant entre la couronne (202) de l'entretoise (20) et la virole (60) de la structure de support d'anneau (6), le joint annulaire en C (50) étant coaxial avec la couronne (202) de l'entretoise (20) et la virole (60) de la structure de support d'anneau (6).

6. Ensemble (2) selon l'un des revendications 1 à 5, dans lequel la structure de support d'anneau (6) comprend en outre une première bride radiale de support (64) et une seconde bride radiale de support (66) axialement distante de la première bride radiale de support (64), chaque pion transversal (40) traversant la première bride radiale de support (64) et la seconde bride radiale de support (66).

7. Ensemble (2) selon l'une quelconque des revendications 1 à 6, dans lequel le ressort radial (70) comprend une plaque métallique (71) ondulée de sorte à présenter au moins un bombage (72).

8. Ensemble (2) selon la combinaison des revendications 6 et 7, dans lequel le ressort radial (70) comprend en outre une languette (73) s'étendant en saillie depuis le sommet du bombage (72) et s'étendant le long du bombage (72) sur une longueur inférieure à la longueur axiale de la plaque métallique (71), la languette (73) étant disposée entre les première et seconde brides radiales de support (64, 66).

9. Ensemble (2) selon l'une des revendications 1 à 8, comprenant en outre une languette d'étanchéité (8) en L disposée à chaque jonction entre deux secteurs d'anneau (10) adjacents, chaque languette d'étanchéité (8) comprenant une grande portion (84) s'étendant axialement et une petite portion (82) s'étendant radialement, la petite portion (82) étant solidaire de la grande portion (84) à une extrémité amont (86) de la grande portion (84).

10. Ensemble (2) selon l'une quelconque des revendications 1 à 9, comprenant en outre un anneau de protection thermique (52) monté radialement à l'intérieur de la deuxième bride radiale (68), la deuxième bride radiale (68) comprenant en outre des trous de décharges (680) traversant axialement ladite deuxième bride radiale (68).

11. Turbomachine comprenant un ensemble (2) selon l'une quelconque des revendications 1 à 10. 1

## Patentansprüche

1. Turbinenring-Anordnung (2), die sich um eine Achse (X-X) erstreckt, umfassend mehrere Ringsektoren (10) aus Verbundmaterial mit einer Keramikmatrix, die einen Turbinenring (4) bilden, und eine Ringstützstruktur (6), die durch ein Turbinengehäuse gehalten wird, wobei jeder Ringsektor (10) eine Basis (12) umfasst, von welcher sich eine stromaufwärtige Verbindungslasche (16) und eine stromabwärtige Verbindungslasche (14), die voneinander axial beabstandet sind, radial nach außen erstrecken, wobei die Anordnung (2) ferner umfasst:
- einen Abstandshalter (20), der mechanisch mit der Ringstützstruktur (6) verbunden ist und einen ersten radialen Flansch (210) in Anlage gegen die stromaufwärtigen Verbindungslaschen (16) der Ringsektoren (10) umfasst, und
- für jeden Ringsektor (10) mindestens zwei Querzapfen (40), wobei jeder Querzapfen (40) die stromaufwärtige Verbindungslasche (16) und die stromabwärtige Verbindungslasche (14) des Ringsektors (10) und die Ringstützstruktur (6) durchquert, um den Ringsektor (10) und die Ringstützstruktur (6) fest miteinander zu verbinden, wobei die Ringstützstruktur (6) ferner einen zweiten radialen Flansch (68) in Anlage gegen die stromabwärtigen Verbindungslaschen (14) der Ringsektoren (10) umfasst, und die stromaufwärtige Verbindungslasche (16) und die stromabwärtige Verbindungslasche (14) jedes Ringsektors (10) axial zwischen dem ersten radialen Flansch (210) und dem zweiten radialen Flansch (68) angeordnet sind, **dadurch gekennzeichnet, dass** die Anordnung (2) ferner eine Radialfeder (70) umfasst, die in einer radialen Richtung (D_{R}) orthogonal zu der axialen Richtung (X-X) gegen den Ringsektor (10) einerseits und gegen die Ringstützstruktur (6) andererseits in Anlage gehalten wird, um die Ringsektoren in derselben radialen Position angeordnet zu halten.
und dass der erste radiale Flansch (210) einen ersten Abschnitt (2103) und einen zweiten Abschnitt (2104) radial innerhalb des ersten Abschnitts (2103) umfasst, wobei der zweite Abschnitt (2104) eine erste Lasche (2105) und eine zweite Lasche (2106) beinhaltet, die axial voneinander beabstandet und alle beide fest mit dem ersten Abschnitt (2103) verbunden sind, wobei die erste Lasche (2105) sich axial stromaufwärts der zweiten Lasche (2106) befindet und die zweite Lasche (2106) in Anlage gegen die stromaufwärtige Verbindungslasche (16) ist.

2. Anordnung (2) nach Anspruch 1, wobei die stromabwärtige Lasche (2106) des ersten radialen Flansches (210) ein erstes Ende, das mit dem ersten Abschnitt (2103) des ersten radialen Flansches (210 fest verbunden ist, und ein zweites Ende umfasst, das frei und dem ersten Ende entgegengesetzt ist, wobei die stromabwärtige Lasche (2106) ferner radiale Schlitze (222) umfasst, die in regelmäßigen Winkelabständen angeordnet sind und sich jeweils von dem zweiten Ende bis zu einer Öffnung (224) erstrecken, wobei die Anzahl der radialen Schlitze (222) höchstens gleich der Anzahl der Ringsektoren (10) ist.

3. Anordnung (2) nach einem der Ansprüche 1 oder 2, wobei der Abstandshalter (20) einen Kranz (202) umfasst, der um den Turbinenring (4) angeordnet ist, und die Ringstützstruktur (6) einen Mantel (60) umfasst, der radial zwischen dem Turbinenring (4) und dem Kranz (202) des Abstandshalters (20) angeordnet ist.

4. Anordnung (2) nach Anspruch 3, wobei der Kranz (202) des Abstandshalters (20) Einspritzöffnungen (220) umfasst und der Mantel (60) der Ringstützstruktur (6) komplementäre Einspritzöffnungen (600) umfasst, die axial in Bezug auf die Einspritzöffnungen (220) versetzt sind.

5. Anordnung (2) nach einem der Ansprüche 3 oder 4, umfassend ferner eine C-Ringdichtung (50), die sich zwischen dem Kranz (202) des Abstandshalters (20) und dem Mantel (60) der Ringstützstruktur (6) erstreckt, wobei die C-Ringdichtung (50) koaxial zu dem Kranz (202) des Abstandshalters (20) und dem Mantel (60) der Ringstützstruktur (6) ist.

6. Anordnung (2) nach einem der Ansprüche 1 bis 5, wobei die Ringstützstruktur (6) ferner einen ersten radialen Stützflansch (64) und einen zweiten radialen Stützflansch (66), der axial von dem ersten radialen Stützflansch (64) beabstandet ist, umfasst, wobei jeder Querzapfen (40) den ersten radialen Stützflansch (64) und den zweiten radialen Stützflansch (66) durchquert.

7. Anordnung (2) nach einem der Ansprüche 1 bis 6, wobei die Radialfeder (70) ein gewelltes Metallblech (71) umfasst, um mindestens eine Wölbung (72) aufzuweisen.

8. Anordnung (2) nach der Kombination der Ansprüche 6 und 7, wobei die Radialfeder (70) ferner eine Zunge (73) umfasst, die sich von dem Scheitel der Wölbung (72) wegragend erstreckt und sich entlang der Wölbung (72) über eine Länge erstreckt, die kleiner als die axiale Länge des Metallblechs (71) ist, wobei die Zunge (73) zwischen dem ersten und zweiten radialen Stützflansch (64, 66) angeordnet ist.

9. Anordnung (2) nach einem der Ansprüche 1 bis 8, umfassend ferner eine Dichtungszunge (8) in L-Form, die an jedem Vereinigungspunkt zwischen zwei benachbarten Ringsektoren (10) angeordnet ist, wobei jede Dichtungszunge (8) einen großen Abschnitt (84), der sich axial erstreckt, und einen kleinen Abschnitt (82), der sich radial erstreckt, umfasst, wobei der kleine Abschnitt (82) fest mit dem großen Abschnitt (84) an einem stromaufwärtigen Ende (86) des großen Abschnitts (84) verbunden ist.

10. Anordnung (2) nach einem der Ansprüche 1 bis 9, umfassend ferner einen thermischen Schutzring (52), der radial innerhalb des zweiten radialen Flansches (68) montiert ist, wobei der zweite radiale Flansch (68) ferner Abströmlöcher (680) umfasst, die den zweiten radialen Flansch (68) axial durchqueren.

11. Turbomaschine, umfassend eine Anordnung (2) nach einem der Ansprüche 1 bis 10.

## Claims

1. A turbine ring assembly (2) extending around an axis (X-X), comprising a plurality of ring sectors (10) made of ceramic matrix composite material, forming a turbine ring (4) and a ring support structure (6) held by a turbine casing, each ring sector (10) comprising a base (12) from which an upstream latching tab (16) and a downstream latching tab (14), spaced axially away from one another, extend radially outward,
the assembly (2) additionally comprising:
- a cross-member (20) mechanically connected to the ring support structure (6) and comprising a first radial flange (210) bearing against the upstream latching tabs (16) of the ring sectors (10), and
- for each ring sector (10), at least two transverse pins (40) and a radial spring (70), each transverse pin (40) passing though the upstream latching tab (16) and the downstream latching tab (14) of the ring sector (10) and the ring support structure (6) to hold the ring sector (10) and the ring support structure (6) secured to one another,
the ring support structure (6) also comprising a second radial flange (68) bearing against the downstream latching tabs (14) of the ring sectors (10), the upstream latching tab (16) and the downstream latching tab (14) of each ring sector (10) being arranged axially between the first radial flange (210) and the second radial flange (68),
**characterized in that** the assembly (2) further comprises a radial spring (70) being held bearing, in a radial direction (D_{R}) orthogonal to the axial direction (X-X), against the ring sector (10) on the one hand and against the ring support structure (6) on the other hand to hold the ring sectors arranged at the same radial position
and **in that** said first radial flange (210) comprises a first portion (2103) and a second portion (2104) radially inside the first portion (2103), the second portion (2104) including a first tab (2105) and a second tab (2106) axially distant from one another and both secured to the first portion (2103), the first tab (2105) being axially upstream of the second tab (2106), and the second tab (2106) bearing against the upstream latching tab (16).

2. The assembly (2) according to claim 1, wherein the downstream tab (2106) of said first radial flange (210) comprises a first end which is secured to the first portion (2103) of the first radial flange (210) and a second end which is free and opposite to the first end, the downstream tab (2106) also comprising radial slots (222) regularly spaced angularly and each extending from the second end to an opening (224), the number of radial slots (222) being at most equal to the number of ring sectors (10).

3. The assembly (2) according to one of claims 1 or 2, wherein the cross-member (20) comprises a bell housing (202) arranged around the turbine ring (4), and the ring support structure (6) comprises a shroud (60) arranged radially between the turbine ring (4) and the bell housing (202) of the cross-member (20).

4. The assembly (2) according to claim 3, wherein the bell housing (202) of the cross-member (20) comprises injection openings (220) and the shroud (60) of the ring support structure (6) comprise complementary injection openings (600) axially offset relative to the injection openings (220).

5. The assembly (2) according to one of claims 3 or 4, also comprising a C-shaped annular seal (50) extending between the bell housing (202) of the cross-member (20) and the shroud (60) of the ring support structure (6), the C-shaped annular seal (50) being coaxial with the bell housing (202) of the cross-member (20) and the shroud (60) of the ring support structure (6).

6. The assembly (2) according to one of claims 1 to 5, wherein the ring support structure structure (6) also comprises a first radial support flange (64) and a second radial support flange (66) axially distant from the first radial support flange (64), each transverse pin (40) passing through the first radial support flange (64) and the second radial support flange (66).

7. The assembly (2) according to any one of claims 1 to 6, wherein the radial spring (70) comprises a metal plate (71) corrugated so as to have at least one camber (72).

8. The assembly (2) according to the combination of claims 6 and 7, wherein the radial spring (70) also comprises a tab (73) protruding from the peak of the camber (72) and extending along the camber (72) over a length less than the axial length of the metal plate (71), the tab (73) being arranged between the first and the second axial support flanges (64, 66).

9. The assembly (2) according to one of claims 1 to 8, also comprising an L-shaped sealing tab (8) arranged at each junction between two adjacent ring sectors (10), each sealing tab (8) comprising a large portion (84) extending axially and a small portion (82) extending radially, the small portion (82) being secured to the large portion (84) at an upstream end (86) of the large portion (84).

10. The assembly (2) according to any one of claims 1 to 9, also comprising a thermal protection ring (52) mounted radially inside of the second radial flange (68), the second radial flange (68) also comprising discharge holes (680) passing axially through said second radial flange (68).

11. A turbomachine comprising an assembly (2) according to any one of claims 1 to 10.
